Europäisches Patentamt

European Patent Office

Office européen des brevets

(19)

(11) Publication number : **0 161 030 B2**

# (12) NEW EUROPEAN PATENT SPECIFICATION

(45) Date of publication of the new patent specification : **08.03.95 Bulletin 95/10**

(51) Int. Cl.⁶ : **H04Q 3/545**

(21) Application number : **85200641.0**

(22) Date of filing : **24.04.85**

(54) **Method and a device for controlling a dataprocessing system.**

(30) Priority : **07.05.84 NL 8401446**

(43) Date of publication of application :
**13.11.85 Bulletin 85/46**

(45) Publication of the grant of the patent :
**27.09.89 Bulletin 89/39**

(45) Mention of the opposition decision :
**08.03.95 Bulletin 95/10**

(84) Designated Contracting States :
**BE DE FR GB IT NL SE**

(56) References cited :
**GB-A- 1 566 801
THIRD INTERNATIONAL CONFERENCE ON
SOFTWARE ENGINEERING FOR TELECOM-
MUNICATION SWITCHING SYSTEMS, 27th-
29th June 1978, Helsinki, Finland, pages
108-113; M.J. MALHERBE et al.: "Metaconta
10CN software system - designing for adap-
tability"
REVIEW OF THE ELECTRICAL COMMUNI-
CATION LABORATORY, vol. 19, no. 3, March
1971, pages 258-265, Tokyo, JP; K. IBUKI et al.:
"DEX-21 call processing programs"**

(56) References cited :
**IEEE INTERNATIONAL CONFERENCE ON
COMMUNICATIONS, 13th-17th June 1982,
Philadelphia, vol. 3, pages 5G.3.1 to 5G.3.5,
IEEE, New York, US; K. HIYAMA et al.: "A
software system for electronic switching sys-
tem using Distributed State Transition
Method"
"Daten-Vermittlungs-Technik (EDS)",
R.v.Decker's Verlag - G. Schenck, Heidel-
berg.Hamburg 1978, pages 345-358
"Das Betriebssystem für das Fernsprechsys-
tem EWSD", Telcom Report 3(1980)Heft 2 by
Andreas Tahy, pages 160-164**

(73) Proprietor : **Philips Electronics N.V.**
**Groenewoudseweg 1**
**NL-5621 BA Eindhoven (NL)**

(72) Inventor : **Hall, Lawrence Martin**
**c/o INT. OCTROOIBUREAU B.V.**
**Prof. Holstlaan 6**
**NL-5656 AA Eindhoven (NL)**

(74) Representative : **Evers, Johannes Hubertus**
**Maria et al**
**INTERNATIONAAL OCTROOIBUREAU B.V,**
**Prof. Holstlaan 6**
**NL-5656 AA Eindhoven (NL)**

EP 0 161 030 B2

## Description

The invention relates to a method and a device for controlling a data-processing system in accordance with the preambles of claims 1 and 2 respectively.

Data-processing systems are found in many forms, for example, data networks and so on. Characteristics of all these systems are that a connection has to be built up, maintained and disrupted between terminals connected to the system. A terminal may be a telephone set, a data unit, a visual display unit and so on. In order to precise the problems which may occur in such systems, they will be set out in detail with reference to a telephone system.

A telephone system, particularly viewed from the side of its user, deals with calls i.e. building up, maintaining and disrupting connections between the terminals of the systems. Any call can be regarded as a process and because a plurality of calls can occur simultaneously in the system, several processes are simultaneously carried out in parallel form.

In principle the processes can be worked in the central control in two ways (see, for example, M.T. Hills and S. Kano, Programming electronic switching systems, P. Peregrinus Ltd. Sevennage, Eng., in particular, Paragraph 2.2-2.4). The first way of working is based on the accomplishment of the calls as a whole. Because a call involves a number of terminals, each of which may be in a number of states, a system based on processing individual calls is complicated by duplication (in some cases multi-duplication) of processing means. In the many different states of a terminal the same function may be demanded, for example, numbers may be expected in the "off hook" state and also in the consultation state. In both cases these functions require independent means (coding) giving rise to extra memory space and to an extra source of errors. In the second way of processing the system is based on terminal-wise processing in which the terminal processing forming part of the same call are interrelated in some manner. The drawback of this manner of processing is that, because the terminal processes are dealt with in parallel, more than one terminal process are worked in one and the same process, which increases the complexity. (for example, by "crossing messages").

A method according to the preamble is described in "Rechnergesteurte Vermittlungssysteme" by P.R. Gerke, Springer Verlag Berlin-Heidelberg-New York 1972, in particular § 9.2 - 9.5.

Herein the partitions of a process are executed sequentially. Control is transferred from one partition to another in a cyclical scheme. Control transfer to another partition is only possible upon completion of the current partition.

This method is not suitable for all situations.

The invention has for its object to provide a method and a device for controlling a data-processing system in which complexity is restricted and "crossing messages" are avoided. According to the invention a method and a device are provided having the characteristic features of claims 1 and 2 respectively.

The invention and its advantages will be described more fully hereinafter with reference to a drawing showing in

Fig. 1 a block diagram of a telephone system,

Fig. 2 a block diagram of a peripheral module for use in a system as shown in Fig. 1,

Fig. 3 a way of carrying out the method embodying the invention,

Fig. 4 a block diagram illustrating the creation of an additional partition in accordance with the invention and

Fig. 5 a diagram of states of a partition inside a process in accordance with the invention.

A data-processing system comprises in general a plurality of terminals connected to a central control. Examples of such systems are: a telephone system, a data-communication system (for example telex), a computer network, and so on. In principle, the invention can be applied to anyone of such systems. By way of example, the invention will be described with reference to the application thereof to a private telephone system. The invention is, however, in no way limited thereto.

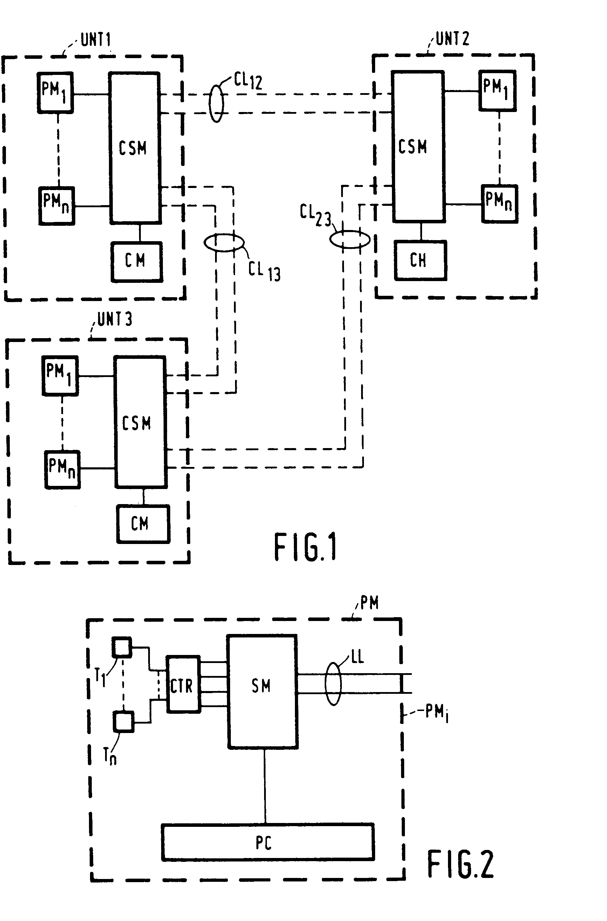

Fig. 1 shows three interconnected telephone systems $UNT_1$, $UNT_2$ and $UNT_3$. Each system comprises a plurality of peripheral modules $PM_1$, ..., $PM_n$, connected to a central switching network CSM. The central control CM of the telephone system is coupled with the central switching network CSM for controlling the same and the peripheral modules. The telephone systems $UNT_1$, $UNT_2$ and $UNT_3$ are interconnected by communication connections $CL_1$, $CL_2$, $CL_3$. The present invention can be applied to the telephone system shown in Fig. 1, but also to systems including more telephone systems or fewer telephone systems and in particular the invention can be applied to a single telephone system.

The peripheral module PM shown in Fig. 2 comprises a switching network SM and a processor PC connected thereto. The peripheral module furthermore comprises a plurality of terminals $T_2$, ..., $T_n$ connected - for example through a concentrator CTR - to the switching network SM. The output side of the switching network is connected through a connection LL to the central switching network CSM. It is noted that the terminals may be connected in a different way, for example, directly to the central control CM (Fig. 1). The peripheral processor PC has a number of tasks such as the recognition of external stimuli (for example, picking up the receiver from a set), the "translation" of the external stimuli into internal stimuli (information for the central control and vice versa), the control of the switching network and the tone control .

In a telephone system a plurality of functions have to be performed such as call control, data management, system assurance and operational maintenance. All these functions may be considered to be processes worked in parallel with other processes by the system. It is not only necessary to perform several functions in parallel, but some functions have to be accomplished several times (for example, it may be necessary to simultaneously work more than one call). To each part is given a number (PIV number) which enables unambiguous identification of the part 1. All processes having the same functions are built up in the same way. Only the data with which they work are different (for example, number analysis, or number of specific subscriber respectively).

A process is defined to be in a stable state when it does not perform work and when no stimuli are offered to the process. When a stimulus is offered, the process carries out the actions it can perform out of the stable state it occupied. After the performance of the actions the process returns into the stable state, which may possibly be different from the stable state it occupied before. The whole sequence of actions from stable state to stable state is termed a transition. One of the actions during a transition may be waiting for a stimulus, for example, the reaction to a generated stimulus. Such a situation seems to be a stable state because the process does not carry out any work; the process only waits for a stimulus. The difference from a stable state is, therefore, that in the waiting time the transition is not yet rounded off.

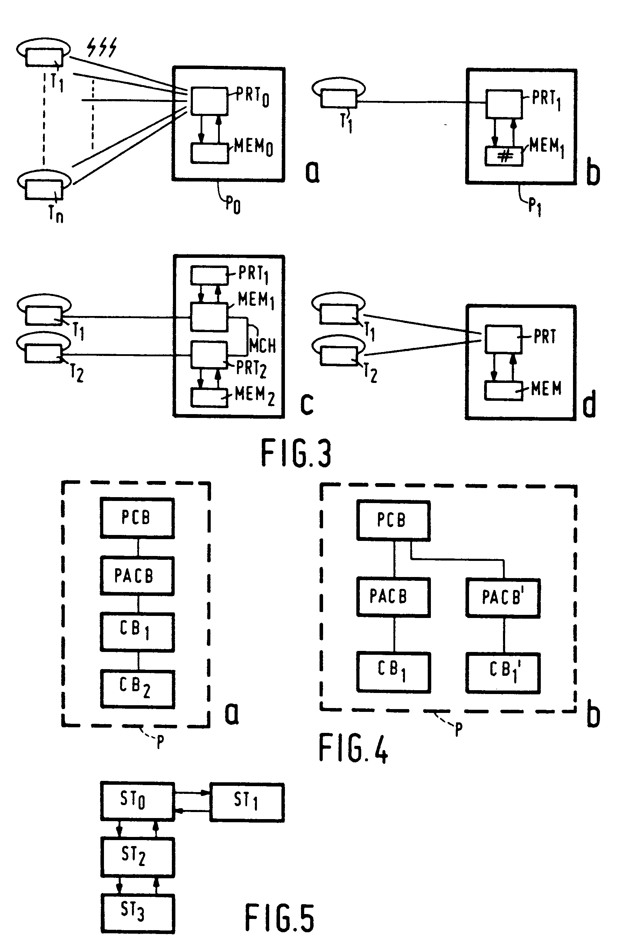

With reference to the example shown in Fig. 3 the method will be set out further for the call control process. In the rest phase (Fig. 3a) the terminals $T_1$, .... $T_n$ are, so to say, coupled with the process $P_0$. This process thus controls all terminals in the rest phase. When at the terminal T, the receiver is lifted from the cradle, this external stimulus is converted by the processor PC (Fig. 1) of the module with which the terminal $T_1$ is associated into an internal stimulus (information) and after the reception of this stimulus a new process $P_1$ is created (Fig. 3b). The terminals $T_2$, ..., $T_n$ continue forming part of the process $P_0$. In the process $P_1$ a partition $PRT_1$ is created. In addition to the partition $PRT_1$ is allotted a local memory space $MEM_1$, which can only be used by partition $PRT_1$. The partition $PRT_1$ and the associated memory space $MEM_1$ then form the individualized part of the central control CM (Fig. 1 ) added to the terminal $T_1$. Stimuli from or to terminal $T_1$ are worked or given off by partition $PRT_1$ or $MEM_1$.

When a next stimulus shows that a call with a further terminal ($T_2$) is desired, a second partition $PRT_2$ (Fig. 3c) is formed inside the process and also obtains a local memory space $MEM_2$. At the same time terminal $T_2$ is removed from process $P_0$. The partition $PRT_2$ constitutes the part of the central control CM (Fig. 1 ) added to terminal $T_2$. Stimuli from or to terminal $T_2$ are worked or given off by $PRT_2/MEM_2$. Between the two partitions of the process an information channel MCH is created.

Consequently in this system the stimuli are not directed to the process but also to one of its partitions (only if the process has only one partition, this difference is unimportant).

As stated above, a partition is normally in the stable state. Only after it is reached by a stimulus is a transition started, during which a number of actions are carried and which stops in a (new) stable state.

Only one partition associated with a process can be in a transition. When a stimulus is received by a partition of a process, all partitions of which were stable, all further partitions are blocked until the partition receiving the stimulus is again in a stable state. In this manner items of information (stimuli) are prevented from crossing themselves. Table 1 shows which situations can occur with respect to the partitions $PRT_1$ and $PRT_2$, in the process and the attainability for stimuli emanating from the partitions.

## TABLE 1

| Partitions | | Process | Stimulus (information) |
|---|---|---|---|
| PRT$_1$ | PRT$_2$ | | |
| stable | stable | stable | A, B |
| running | stable | running | — |
| stable | running | running | — |
| waiting | stable | waiting | A |
| stable | waiting | waiting | B |

An exception to the rule that only one partition may be in transition, can be made when, during the performance of a stimulus by a partition, the partition has to wait for a stimulus, for example, because a reaction is awaited to a "demand" of the partition. In such a case it can be imagined that the partition informs the operating system of the central control, and that the waiting time could be used for any stimulus for one of the other partitions associated with a different process.

In the call phase (Fig. 3d) the partitions PRT$_1$ and PRT$_2$ and the associated memory spaces MEM$_1$ and MEM$_2$ are combined because stimuli in this phase can only relate to the call as a whole. Duplication of functions is thus avoided. If, however, during the call phase one of the subscribers wants a consultation, such an action leads to the creation of a new partition for the terminal T$_3$ i.e. the terminal which is consulted.

Stimuli (items of information) are exchanged between partitions, passed from terminals to partitions and from partitions to terminals under the control of the operating system. To each stimulus (information) some priority can be allotted so that, for example, a higher-priority information is worked earlier by the operating system than a lower-priority information. The partitions inside one process communicate with one another through the information channel in which, as stated above, crossing items of information are excluded. An information from one partition of a process to the other will, therefore, only be worked after the first partition has become stable.

At the end of the call the process is eliminated and the terminals concerned are set back into the rest phase (Fig. 3a).

As stated above, one or more partitions can be created in a process and be designed for carrying out a partial function. Fig. 4 illustrates the creation of one additional partition. Fig. 4a shows the starting position. The process P comprises a process control block PCB containing the data specific to the process. For example, there are data about the partitions forming parts of the process, giving the identification (PIV number). Furthermore the process comprises a partition control block PACB indicated hierarchically arranged under the process control block. In this block are stored the partition specific data, for example, the state of the partition (stable, waiting, running), data about the further partitions of the process and about neighbouring partitions and so on. The blocks CB$_1$ and CB$_2$ indicate finally the memory space reserved for the partitions (in this example two parts) and attainable only by the partition concerned, the memory space containing the application data.

Fig. 4b shows the state after a new, independent partition PACB' is created inside the process P. This is done by creating a new partition control block PACB' and the allotment of one of the control blocks to said partition. In this example the block CB$_2$ is allotted to partition PACB'. Because this partition is the only one of partition control block PACB' it is (also) indicated by CB$_1$'. In creating a new partition there is also specified the state in which the new partition will be. Between the independent partitions PACB and PACB' is furthermore created an information channel A for the communication between the two partitions.

The elimination of a partition and the combination of two partitions into one are carried out in the manner

4

opposite to that described above for creating an extra partition.

Fig. 5 shows the state diagram of a partition. From the rest position $ST_0$ the partition can be brought into the state $ST_1$, a blocked state, from which state $ST_1$ it can again come into the stable state $ST_0$. On the other side the partition can be brought from the rest position $ST_0$ into the "running" state $ST_2$, when a stimulus is worked, whilst after this working it can get back into the stable state $ST_0$. During the "running" state $ST_2$ the partition may require given information from a further partition inside or out of the process and may have to wait for the demanded information. In this case the process is brought from the state ("running") $ST_2$ into the state waiting $ST_3$. After the reception of the information concerned the partition is brought back into the "running" state $ST_2$ and continues working. As stated above, only one partition inside a process can be in state $ST_2$ or state $ST_3$. All other partitions are then in state $ST_1$.

## Claims

1. A method for controlling a data-processing system comprising a plurality of terminals connected to a central control, wherein, at the beginning of the data-processing, in the central control a process is created which will carry out the function demanded by a terminal, the method comprising the following steps:

   (1) within said process one or more partitions are created for carrying out a part of the demanded function, whilst an information channel is created between the partitions associated with the same process;

   (2) a stimulus for the process, i.e. item of information, is applied to that partition which is designed for processing said stimulus;

   (3) during processing of the stimulus of step 2 stimuli, i.e. items of information, can be sent from the processing partition to the remainder of the system;

   (4) in the absence of any stimulus all partitions of a process are accessible by stimuli;

   characterized in that the method further comprises the following steps

   (5) to each partition a local memory space is allotted, which can only be used by the partition concerned;

   (6) during processing of the stimulus of step 2 stimuli, i.e. items of information, can be exchanged between the processing partition and the further partitions associated with the same process and/or can be received by the processing partition from the remainder of the system, all further partitions which may form part of the process being blocked for stimuli other than those mentioned in this step until the processing of the stimulus of step 2 has finished;

   (7) the partition of step 2 can be brought into a waiting state, before the processing of the stimulus of step 2 has finished, when this partition has to wait for a stimulus coming from another partition in reaction on a stimulus sent by the partition of step 2 to said another partition;

   (8) during the waiting state of a partition stimuli can be applied to one of the other partitions belonging to a different process.

2. A device for controlling a data-processing system comprising a plurality of terminals ($T_1$ ... $T_n$) connected to a central control (CM) and means for creating a process (P) in the central control (CM) at the beginning of a data process (P) for carrying out the function demanded by a terminal, the device comprising:

   - means for creating one or more partitions (PRT) within the process for carrying out a part of the demanded function;

   - an information channel (MCH) between the partitions associated with the same process;

   - means for applying a stimulus to that partition of a process which is designed for processing said stimulus;

   - means for sending stimuli from the processing partitions to the remainder of the system, during the processing of said stimulus;

   - means for making all partitions of a process accessible by stimuli, in the absence of any stimulus;

   characterized in that the device further comprises:

   - local memory space (MEM) allotted to each partition and exclusively utilisable by said partition;

   - means for exchanging stimuli between the processing partition and the further partitions associated with same process, during the processing of said stimulus;

   - means for receiving stimuli from the remainder of the system by the processing partition, during the processing of said stimulus;

   - means for blocking all further partitions forming the process during processing of the stimulus by one of the partitions, for other stimuli than stimuli sent by the processing partition of the same process;

   - means for unblocking the blocked partitions associated with one process after termination of the

EP 0 161 030 B2

processing of said stimulus;
- means for bringing a processing partition into a waiting state before the processing of said stimulus has finished, when this partition has to wait for a stimulus coming from another partition in reaction on a stimulus sent by the processing partition to said another partition;
- means for applying stimuli to one of the partitions belonging to a different process, during the waiting state of a partition.


**Patentansprüche**

1. Verfahren zur Regelung eines Datenverarbeitungssystems mit einer mit einer Zentralregelung verbundenen Anzahl Anschlüsse, wobei am Anfang der Datenverarbeitung in der Zentralregelung ein Verfahren erzeugt wird, das die von einem Anschluss erforderte Funktion durchführt, wobei dieses Verfahren die nachfolgenden Verfahrensschritte umfaßt:

(1) in dem Verfahren werden ein oder mehrere Abteilungen gemacht zum Durchführen eines Teils der erforderten Funktion, während zwischen den demselben Verfahren zugeordneten Abteilungen ein Informationskanal erzeugt wird,

(2) es wird ein Reiz für das Verfahren, d.h. ein Informationsgegenstand, derjenigen Abteilung zugeführt, die zum Bearbeiten dieses Reizes vorgesehen ist,

(3) während der Verarbeitung des Reizes des Schrittes 2 können Reize, d.h. Informationsgegenstände, von der Verarbeitungsabteilung zu dem restlichen Teil des Systems gesendet werden,

(4) beim Fehlen jedes Reizes sind alle Abteilungen eines Verfahrens für Reize zugänglich,

<u>dadurch gekennzeichnet</u>, daß das Verfahren weiterhin die nachfolgenden Verfahrensschritte umfaßt:

(5) jeder Abteilung ist ein Ortsspeicherraum zugeordnet, der nur von der betreffenden Abteilung benutzt werden kann;

(6) während der Verarbeitung des Reizes des Schrittes 2 können Reize, d.h. Informationsgegenstände, zwischen der Verarbeitungsabteilung und den weiteren, demselben Verfahren zugeordneten Abteilungen und/oder zwischen der Verarbeitungsabteilung und dem restlichen Teil des Systems ausgetauscht werden, wobei alle weiteren Abteilungen, die einen Teil des Verfahrens bilden können, für Reize, anders als diejenigen aus dem Schritt 3 gesperrt werden, bis die Bearbeitung des Reizes des Schrittes 2 beendet ist;

(7) die Abteilung des Schrittes 2 kann in eine Wartelage gebracht werden, bevor die Verarbeitung des Reizes des Schrittes 2 beendet ist, wenn diese Abteilung auf einen Reiz warten muß, der in Reaktion auf einen Reiz, der von der Abteilung des Schrittes 2 zu der geannnten anderen Abteilung gesendet ist, von einer anderen Abteilung herrührt;

(8) in der Wartelage einer Abteilung können einer oder mehreren Abteilungen, die zu einem anderen Prozeß gehören, Reize zugeführt werden.

2. Anordnung zur Regelung eines Datenverarbeitungssystems mit einer mit einer Zentralregelung (CM) verbundenen Anzahl Anschlüsse ($T_1...T_n$) und mit Mitteln zum Erzeugen eines Verfahrens (P) in der Zentralregelung (CM) am Anfang einer Datenverarbeitung (P) zum Durchführen der von einem Anschluß erforderten Funktion, wobei diese Anordnung die nachfolgenden Elemente aufweist:

- Mittel zum Erzeugen einer oder mehrerer Abteilungen (PRT) in dem Verfahren zum Durchführen einer Teilfunktion der erforderlichen Funktion,
- einen Informationskanal (MCH) zwischen den demselben Verfahren zugeordneten Abteilungen,
- Mittel zum Zuführen eines Reizes zu derjenigen Abteilung eines Verfahrens, die zum Verarbeiten dieses Reizes bestimmt ist,
- Mittel zum Zuführen von Reizen von den Verarbeitungsabteilungen zu den restlichen Abteilungen des Sustens währendder verarbeitung des genannten Reizes;
- Mittel um alle Abteilungen eines Verfahrens für Reize zugänglich zu machen beim Fehlen irgendeines Reizes;

<u>dadurch gekennzeichnet</u>, daß die Anordnung weiterhin die nachfolgenden Elemente aufweist:

- Ortsspeicherraum (MEM), der jeder Abteilung zugeordnet ist und ausschliesslich von dieser Abteilung benutzt werden kann,
- Mittel zum Austauschen von Reizen zwischen der Verarbeitungsabteilung und den weiteren, demselben Prozeß zugeordneten Abteilungen während der Verarbeitung des genannten Reizes;
- Mittel zum Empfangen von Reizen von den restlichen Abteilungen des Systems durch die verarbeitungsabteilung während der Verarbeitung des genannten Reizes;

- Mittel zum Sperren aller weiteren einen Teil des Verfahrens bildenden Abteilungen während der Verarbeitung des Reizes durch eine der Abteilungen, für andere Reize als Reize, die durch die Verarbeitungsabteilung desselben Verfahrens gesendet werden,
- Mittel zum Freigeben der dem einen Verfahren zugeordneten gesperrten Abteilungen nach Beendigung der Verarbeitung des genannten Reizes;
- Mittel zum Überführen einer Verarbeitungsabteilung in eine Wartelage, bevor die Verarbeitung des Reizes beendet ist, wenn diese Abteilung auf einen Reiz warten muß, der in Reaktion auf einen Reiz, der von der Verarbeitungsabteilung zu der geannnten anderen Abteilung gesendet ist, von einer anderen Abteilung herrührt;
- Mittel zum Zuführen von Reizen zu einer der Abteilungen, die einem anderen Verfahren zugeordnet sind, während der Wartelage einer Abteilung.

## Revendications

1.  Procédé pour commander un système de traitement de données comprenant plusieurs terminaux connectés à une commande centrale, dans lequel au début du traitement des données, dans la commande centrale est crée, un processus qui réalisera la fonction demandée par un terminal, le procédé comprenant les opérations suivantes:

    (1) une ou plusieurs partitions sont créées dans ledit processus pour réaliser une partie de la fonction demandée, tandis qu'un canal d'information est créé entre les partitions associées au même processus;

    (2) un stimulus pour le processus, c'est-à-dire un élément d'information, est fourni à la partition qui est prévue pour le traitement de ce stimulus;

    (3) pendant le traitement du stimulus de l'opération 2, des stimuli, c'est-à-dire des éléments d'information, peuvent être envoyés à partir de la partition effectuant le traitement vers le reste du système;

    (4) en l'absence de tout stimulus, toutes les partitions d'un processus sont accessibles pour des stimuli, caractérisé en ce que le procédé comprend les opérations suivantes :

    (5) à chaque partition est attribué un espace de mémoire local qui ne peut être utilisé que par la partition concernée;

    (6) pendant le traitement du stimulus de l'opération 2, des stimuli, c'est-à-dire des éléments d'information, peuvent être échangés entre la partition effectuant le traitement et les autres partitions associées au même processus et/ou peuvent être reçus par la partition effectuant le traitement à partir du reste du système, toutes les autres partitions qui peuvent faire partie du processus étant bloquées pour des stimuli autres que ceux mentionnés dans cette opération jusqu'à ce que le traitement du stimulus de l'opération 2 soit terminé;

    (7) la partition de l'opération 2 peut être amenée dans un état d'attente avant que le traitement du stimulus de l'opération 2 ne soit terminé, lorsque cette partition doit attendre l'arrivée d'un stimulus provenant d'une autre partition en réaction à un stimulus envoyé par la partition de l'opération 2 vers l'autre partition;

    (8) pendant l'état d'attente d'une partition des stimuli peuvent être fournis à l'une des autres partitions appartenant à un processus différent.

2.  Dispositif pour commander un système de traitement de données comprenant plusieurs terminaux ($T_1$, ..., $T_n$) connectés à une commande centrale (CM) et des moyens pour créer un processus (P) dans la commande centrale (CM) au début d'un traitement de données (P) pour réaliser la fonction demandée par un terminal, le dispositif comprenant :

    - des moyens pour créer une ou plusieurs partitions (PRT) dans le processus afin de réaliser une partie de la fonction demandée;
    - un canal d'information (MCH) entre les partitions associées au même processus;
    - des moyens pour appliquer un stimulus à la partition d'un processus qui est prévue pour le traitement de ce stimulus;
    - des moyens pour envoyer des stimuli à partir des partitions effectuant le traitement vers le reste du système, pendant le traitement dudit stimulus;
    - des moyens pour rendre toutes les partitions d'un processus accessibles par des stimuli, en l'absence de tout stimulus, caractérisé en ce que le dispositif comprend, en outre :
    - un espace de mémoire local (MEM) qui est attribué à chaque partition et qui ne peut être utilisé exclusivement que par ladite partition;

7

- des moyens pour échanger des stimuli entre la partition effectuant le traitement et les autres partitions associées au même processus, pendant le traitement dudit stimulus;
- des moyens pour la réception de stimuli du reste du système par la partition effectuant le traitement, pendant le traitement dudit stimulus;
- des moyens pour bloquer toutes les autres partitions formant le processus pendant le traitement dudit stimulus par une des partitions, pour des stimuli autres que ceux envoyés par la partition effectuant le traitement du même processus;
- des moyens pour débloquer les partitions bloquées associées audit processus au terme de l'exécution du traitement dudit stimulus;
- des moyens pour amener une partition effectuant le traitement dans un état d'attente avant que le traitement dudit stimulus ne soit terminé, lorsque cette partition doit attendre l'arrivée d'un stimulus provenant d'une autre partition en réaction à un stimulus envoyé par la partition effectuant le traitement à l'autre partition;
- des moyens pour appliquer des stimuli à une des partitions appartenant à un processus différent, pendant l'état d'attente d'une partition.

FIG.1

FIG.2

FIG.3

FIG.4

FIG.5